# EUROPEAN PATENT APPLICATION

(11) **EP 4 356 997 A1**
(43) Date of publication of application: **24.04.2024**
(21) Application number: 21777349.8
(22) Date of filing: 15.06.2021
(51) Int. Cl.: B01D 5/00

(54) **SYSTEM FOR THE CONDENSATION OF ATMOSPHERIC WATER VAPOUR**

(71) Applicant: Arquimea Group S.A., 28919 Leganés (Madrid) (ES)
(72) Inventor: RIVERA SORIA, Cayetano, 28045 Madrid (ES)
(74) Representative: López Camba, Emilia
(86) International application number: PCT/ES2021/070436
(87) International publication number: WO 2022/263688

(57) **Abstract**

A system for the condensation of atmospheric water vapour which allows the water contained in atmospheric water vapour to be captured by condensation with a minimum energy investment and which comprises: a straight duct fitted at one end with an atmospheric air impulsion system; a convergent nozzle arranged downstream of the straight duct; a nozzle neck with a convergence zone, i.e. decreasing to half its length and then expanding; a diffuser arranged at the outlet of the convergent nozzle and fitted with a system for removing the condensed water; and a hot air outlet and a water tank which collects part of the condensed water in the diffuser, where ducts leave from this tank to the first sprinkler(s) and to the second water sprinkler(s) arranged in the neck of the nozzle.

## Description

### OBJECT OF THE INVENTION

The object of the present invention, as the title of the invention states, is a system for the condensation of atmospheric water vapour, i.e., it refers to a system that makes it possible to capture the water contained in atmospheric water vapour by means of condensation with a minimum energy investment.

The present invention is characterised by the special design and configuration of each and every one of the elements and parts that form part of the system in such a way as to cause the condensation of atmospheric water vapour with the minimum possible energy investment and the subsequent use of the heat from the condensation process to obtain energy to sustain the cycle or even produce a surplus.

The present invention therefore falls within the field of systems for obtaining water contained in the atmosphere.

### BACKGROUND OF THE INVENTION

Current technology for capturing water from the atmosphere is of two types:
- Passive, which is based on taking advantage of natural condensation only when it occurs spontaneously. This severely limits its effectiveness, production, and the number of places where it can be applied. Nets are placed on the tops of some mountains or on towers in certain areas waiting for conditions that cause moisture to condense on the nets. These passive systems are usually in the form of nets, such as the nets that are placed on wet mountain tops and slopes or the Warka tower, which is a structure that holds a three-dimensional net to try to capture dew.
- Active, which is based on cooling the air by means of a refrigeration machine. This system has the drawback that it needs to get rid of the heat generated by condensation, so its energy consumption for refrigeration is very high.

Therefore, we observe that water harvesting either presents difficulties of efficiency and production as well as a correct location, or instead it can present problems of high energy consumption.

Consequently, the object of the present invention is to develop a machine or system that allows obtaining water vapour contained in the atmosphere without limitation of efficiency, production, location, and energy consumption, by developing a system such as the one described below and which is essentially described in the first claim.

### DESCRIPTION OF THE INVENTION

The object of the present invention is a system that uses the aerodynamic effects produced in a nozzle to cause the condensation of atmospheric water vapour with the lowest possible energy investment and the subsequent use of the heat from the condensation process to obtain energy to sustain the cycle or even produce a surplus.

The machine that forms part of the system is based on the principle of processing and cooling air, which requires very little energy to operate, using the latent heat of condensation to provide that energy and close the water extraction cycle without any energy consumption. This also means that it can be used in remote locations that have no connection to the electricity grid, since without access to the water distribution network there may also be no access to the power grid. This could allow exploiting land that is not currently exploitable because of this limitation.

The proposed machine requires almost no installation, requires very low maintenance, has absolutely no impact on the environment, can be placed anywhere as long as the air is humid, and consumes no energy.

The invention presented here generates autonomously the necessary conditions for condensation, i.e. air flow, cooling, and the whole cycle, requiring only the presence of humidity in the air to operate.

The system comprises:
- A straight duct fitted at one end with an impulsion system for atmospheric air, preferably warm, moist air, where the means of impulsion may be fans or any other means of inducing an air movement that results in the penetration of the outside air into the straight duct
   If the ambient air is not sufficiently humid, the humidity of the air can be increased by means of water dispersers or sprinklers in this slow-moving section, so that the humidity of the incoming air is increased by projecting a cloud of water droplets.
   This evaporation will lower the temperature of the fluid, so it must be allowed to absorb heat from the environment to recover a temperature similar to the outside but saturated with vapour. In this same duct, the fluid could be actively heated to take advantage of residual heat, or heat not used in the flow at the outlet of the machine.
   There is also the option of preheating the inlet flow by recirculating unused heat from the outlet so that the overall efficiency is increased.
- A converging nozzle downstream of the straight duct where the warm, moist, slow-moving inlet air enters this converging nozzle so that flow conservation will force the air flow to accelerate as the nozzle narrows. To make this possible, the gas obtains this kinetic energy at the cost of lowering its temperature and pressure.
- A neck. The nozzle is convergent in shape, i.e. its free cross-section decreases along its length up to its end where the neck is located. In the neck of the nozzle the temperature is so low that water vapour begins to condense spontaneously.
   Optionally, to improve the condensation rate, one or more sprinklers are placed near the neck of the nozzle so that thousands of small micro-droplets act as seeds to generate droplets with the condensing water.
   Since the rate of re-evaporation of water is highly dependent on the area of contact with the air, the larger the droplets or masses of water obtained during condensation in the throat, the slower the re-evaporation rate will be. Therefore, thanks to this hysteresis effect, the fluid can be partly slowed down and some of its pressure can be recovered.
- A diffuser arranged at the outlet of the converging nozzle after passing through the neck and provided with a system for the removal of the condensed water from the rest of the fluid by the most appropriate method, such as, for example, a cyclone, or grooves in the walls.
- A hot air outlet connected to the outlet of the condensed water removal system and which may be provided with means of utilising the latent heat at the fluid outlet so that part of the energy released by the condensation of the steam can be recovered.
- A water tank which collects part of the condensed water in the diffuser through a connection to the water tank, and from the water tank there are pipes to the first water nozzle(s) arranged in the straight section and to the second water nozzle(s) arranged in the nozzle neck.
   This recovered energy is used to continue propelling more humid air to the cycle inlet, and the reaction can be maintained without external energy input. Thus, the system is self-supplied with a stream of warm, humid air and obtains the water and hot air separately.

Therefore, and as a consequence of the structural characteristics of the media used and the kinematics to which the air is subjected, a system is obtained that allows:
- A reduction in energy consumption by producing condensation by aerodynamic rather than thermal means.
- A reuse of the energy released by the condensation of steam.

Together, these two characteristics mean that this system can operate without external energy input or even produce an energy surplus in addition to the water that is the main product.

It is a very simple process requiring very low investment or maintenance and with very few moving parts.

As it does not consume energy, it is autonomous, so it can operate anywhere without the need for prior infrastructure.

It does not pollute or contaminate and has no impact on the environment.

It can produce an energy surplus.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:
Figure 1 shows a schematic representation of the system in which the different parts of the system can be seen.

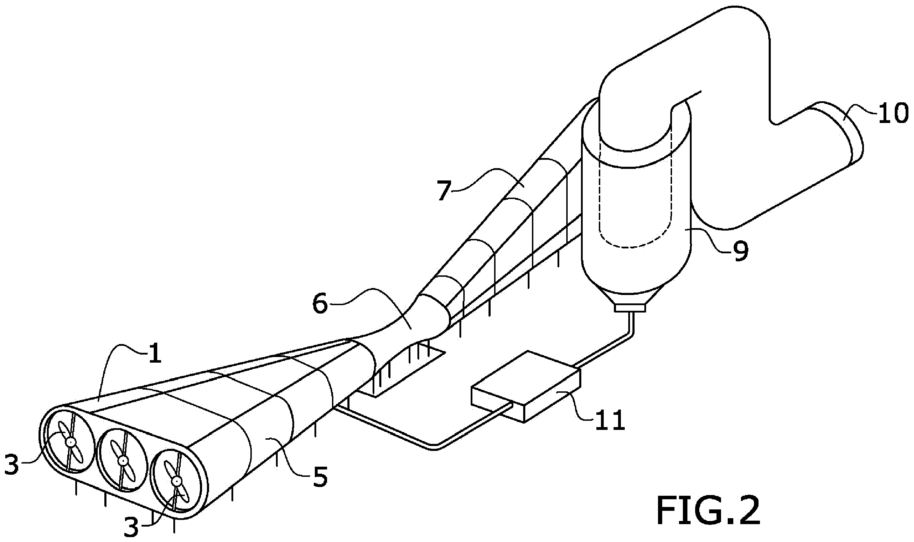

Figure 2 shows a perspective view of the system.

### PREFERRED EMBODIMENT OF THE INVENTION

In view of the figures, a preferred embodiment of the proposed invention is described below.

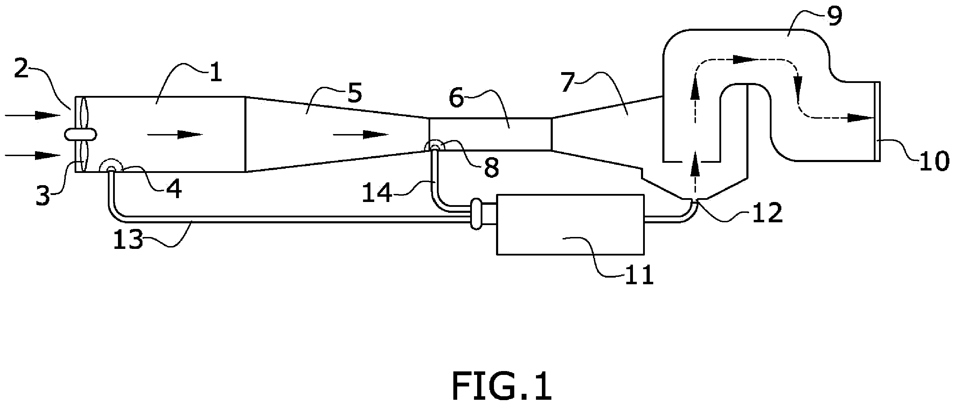

Figure 1 shows that the system comprises a duct (1), which may be straight, fitted at its free end with an air impulsion system (2) from the outside, which in the embodiment shown are fans, although any other means of impulsion may be used. In addition, in order to increase the humidity of the inlet air, this straight duct (1) may be fitted with a first water microdroplet disperser (4).

This warm, humid, and slow-moving air present in the straight duct (1) passes into a converging nozzle (5) which has a decreasing section as smooth as possible so that the conservation of the flow will force the fluid to accelerate as the nozzle narrows, for which the fluid obtains this kinetic energy at the cost of lowering its temperature and pressure, arriving at a neck (6) of the nozzle where the fluid will begin to condense spontaneously.

The neck (6) of the nozzle has a narrowing free cross-section to approximately half its length, followed by a widening of its free cross-section.

One or more second water sprinklers (8) can be placed in the neck (6) of the nozzle so that there are thousands of small micro-droplets that serve as a seed to generate droplets with the condensing water.

At the outlet of the neck (6) of the nozzle is a diffuser (7) fitted with a liquid water removal system (9) which may be a cyclone or the arrangement of a series of grooves in the wall or any other method.

Once the liquid water has been withdrawn, the duct passage continues to enlarge, so that the velocity drops to a velocity similar to the initial velocity and the pressure approaches atmospheric pressure. However, due to the latent heat released by the water during condensation, which is not recovered by the water after it has been withdrawn, the temperature of the air at low velocity turns out to be much higher than the ambient temperature and the hot air outlet (10) is located at the outlet of the liquid water withdrawal system (9). This hot air can be used as a heat source in a thermal machine and the condensed water as a cold source, so that part of the energy released by the condensation of the vapour can be recovered.

The diffuser (7) has a connection (12) with a water tank (11) in which part of the condensed water is collected and, by means of a first duct (13) that goes from the tank (11) to the straight duct (1), and a second duct (14) that goes from the tank (11) to the nozzle neck (6), water can be supplied to the first sprinkler(s) (4) and to the second sprinkler(s) (8) respectively, so that micro-droplets of water can be supplied to promote the increase in humidity of the inlet air and condensation in the nozzle neck (6).

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. System for the condensation of atmospheric water vapour **characterised in that** it comprises:
- A duct (1) fitted at one end with an atmospheric air impulsion system (2),
- A converging nozzle (5) downstream of the straight duct (1) where the warm, moist, slow-moving inlet air enters this converging nozzle so that flow conservation will force the air flow to accelerate as the nozzle narrows. To make this possible, the gas obtains this kinetic energy at the cost of lowering its temperature and pressure.
- A nozzle neck (6) that reduces its free section to about half its length and then presents an expansion zone, and it is here that the temperature is so low that the water vapour begins to condense spontaneously.
- A diffuser (7) arranged at the outlet of the neck (6) of the nozzle and provided with a system for removing the condensed water from the rest of the fluid
- A hot air outlet (10) connected to the outlet of the condensed water removal system and which may be provided with means of utilising the latent heat in the fluid outlet so that part of the energy released by the condensation of the vapour can be recovered.

2. System for the condensation of atmospheric water vapour according to claim 1, **characterised in that** fans (3) are used as the impulsion system (2).

3. System for the condensation of atmospheric water vapour according to claim 1 or 2, **characterised in that** if the ambient air is not sufficiently humid in the straight section (1), the humidity of the air is increased by means of first water dispersers or sprinklers (4).

4. System for the condensation of atmospheric water vapour according to claim 1 or 2 or 3, **characterised in that** in the straight section (1) the fluid is actively heated by using waste heat, or unused heat at the outlet of the condensation system itself, or by passively allowing its temperature to equalise with the ambient temperature after humidification but before reaching the nozzle.

5. System for the condensation of atmospheric water vapour according to any of the previous claims, **characterised in that** one or several second water sprinklers (8) are placed in the neck (6) of the nozzle so that there are thousands of small microdroplets that serve as seeds to generate drops with the condensing water.

6. System for the condensation of atmospheric water vapour according to any of the previous claims, **characterised in that** the system for removing the condensed water from the rest of the fluid is by means of a cyclone, or grooves in the walls, or inertial methods.

7. System for the condensation of atmospheric water vapour according to claim 5, **characterised in that** the system also has a water tank (11) which collects the water condensed in the diffuser through a connection (12) with the tank, with a first duct (13) leading from this tank (11) to the first water sprinkler(s) (4) arranged in the straight section (1) and a second duct (14) to the second water sprinkler(s) (8) arranged in the neck (6) of the nozzle.

## Amended claims

### Amended claims under Art. 19.1 PCT

1. System for the condensation of atmospheric water vapour **characterised in that** it comprises:
- A straight duct (1) fitted at one end with an atmospheric air impulsion system (2),
- A converging nozzle (5) downstream of the straight duct (1) where the warm, moist, slow-moving inlet air enters this converging nozzle so that flow conservation will force the air flow to accelerate as the nozzle narrows. To make this possible, the gas obtains this kinetic energy at the cost of lowering its temperature and pressure.
- A nozzle neck (6) that reduces its free section to about half its length and then presents an expansion zone, and it is here that the temperature is so low that the water vapour begins to condense spontaneously.
- A diffuser (7) arranged at the outlet of the neck (6) of the nozzle and provided with a system for removing the condensed water from the rest of the fluid
- A hot air outlet (10) connected to the outlet of the condensed water removal system and which is provided with means of utilising the latent heat in the fluid outlet so that part of the energy released by the condensation of the vapour can be recovered.

2. System for the condensation of atmospheric water vapour according to claim 1, **characterised in that** fans (3) are used as the impulsion system (2).

3. System for the condensation of atmospheric water vapour according to claim 1 or 2, **characterised in that** if the ambient air is not sufficiently humid in the straight section (1), the humidity of the air is increased by means of first water dispersers or sprinklers (4).

4. System for the condensation of atmospheric water vapour according to claim 1 or 2 or 3, **characterised in that** in the straight section (1) the fluid is actively heated by using waste heat, or unused heat at the outlet of the condensation system itself, or by passively allowing its temperature to equalise with the ambient temperature after humidification but before reaching the nozzle.

5. System for the condensation of atmospheric water vapour according to any of the previous claims, **characterised in that** one or several second water sprinklers (8) are placed in the neck (6) of the nozzle so that there are thousands of small microdroplets that serve as seeds to generate drops with the condensing water.

6. System for the condensation of atmospheric water vapour according to any of the previous claims, **characterised in that** the system for removing the condensed water from the rest of the fluid is by means of a cyclone, or grooves in the walls, or inertial methods.

7. System for the condensation of atmospheric water vapour according to claim 5, **characterised in that** the system also has a water tank (11) which collects the water condensed in the diffuser through a connection (12) with the tank, with a first duct (13) leading from this tank (11) to the first water sprinkler(s) (4) arranged in the straight section (1) and a second duct (14) to the second water sprinkler(s) (8) arranged in the neck (6) of the nozzle.
